(19) Europäisches Patentamt
European Patent Office
Office européen des brevets

(11) EP 2 922 615 B1

(12) EUROPEAN PATENT SPECIFICATION

(45) Date of publication and mention of the grant of the patent:
**15.01.2020 Bulletin 2020/03**

(21) Application number: **13856493.5**

(22) Date of filing: **26.11.2013**

(51) Int Cl.:
***B01D 53/64*** *(2006.01)* ***B01D 53/79*** *(2006.01)*
***B01D 53/83*** *(2006.01)* ***B01D 53/48*** *(2006.01)*

(86) International application number:
**PCT/US2013/071978**

(87) International publication number:
**WO 2014/082076 (30.05.2014 Gazette 2014/22)**

# (54) CONTROL OF MERCURY EMISSIONS

STEUERUNG VON QUECKSILBEREMISSIONEN

RÉGULATION DES ÉMISSIONS DE MERCURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**26.11.2012 US 201261729823 P**
**26.11.2012 US 201261729828 P**
**26.11.2012 US 201261729837 P**

(43) Date of publication of application:
**30.09.2015 Bulletin 2015/40**

(60) Divisional application:
**17203615.4**
**18193379.7 / 3 434 353**

(73) Proprietor: **Ecolab USA Inc.**
**St. Paul, MN 55102 (US)**

(72) Inventors:
- **KEISER, Bruce**
  **Plainfiled, Illinois 60585 (US)**
- **SHAH, Jitendra**
  **Naperville, Illinois 60564 (US)**
- **DORNER, Robert W.**
  **30539 Hannover (DE)**
- **YUAN, Jianwei**
  **Aurora, Illinois 60503 (US)**
- **CARLSON, Wayne M.**
  **Batavia, Illinois 60510 (US)**

(74) Representative: **Godemeyer Blum Lenze Patentanwälte Partnerschaft mbB - werkpatent**
**An den Gärten 7**
**51491 Overath (DE)**

(56) References cited:
**WO-A2-2013/169811**
**GB-A- 1 336 241**
**US-A- 4 943 377**
**US-A1- 2006 021 506**
**US-A1- 2009 202 407**
**US-A1- 2009 202 407**
**US-A1- 2010 284 878**
**US-A1- 2011 014 104**
**US-A1- 2011 243 819**
**US-A1- 2011 262 326**
**US-A1- 2011 262 326**
**US-A1- 2012 048 110**
**US-A1- 2012 177 554**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 922 615 B1

## Description

### TECHNICAL FIELD

The present disclosure relates generally to methods for controlling emissions of hazardous air pollutants, and more particularly, to methods for controlling mercury emissions from wet flue gas desulfurizers and/or controlling corrosion of scrubber equipment.

### BACKGROUND

Many electricity generating units (EGUs) burn fossil fuels to produce electricity. The combustion process produces intense heat and flue gas, which contains hazardous air pollutants (e.g., Hg, $CO_2$, $SO_2$, $SO_3$, HCl). The flue gas is typically scrubbed prior to release into the atmosphere to reduce emissions of the pollutants. Wet flue gas desulfurizers (WFGDs) are one type of scrubber commonly used to reduce emissions. A WFGD contacts the combustion gas with an aqueous alkaline solution. This solution may be composed of magnesium compounds, sodium compounds, and slurries of lime or limestone to capture and neutralize acid gases, such as sulfur dioxide. The aqueous alkaline solution is commonly referred to as "WFGD liquor" or "scrubber liquor." In a forced oxidation system, oxygen may be introduced into the WFGD liquor to oxidize sulfite to sulfate. In many cases, this forms gypsum (calcium sulfate), as the final byproduct of scrubbing. Other systems may utilize inhibited or natural oxidation scrubbing, which results in sulfite salts or mixed sulfite/sulfate salts as byproduct.

Mercury entering EGUs as a contaminant of the fuel is released during combustion. Combustion gases exiting the boiler may contain mercury in three forms: particulate, oxidized, and elemental. Particulate mercury can be captured by particulate control devices such as electrostatic precipitators (ESPs) and fabric filters (FF). Oxidized mercury is water-soluble and as such, WFGDs can absorb the oxidized mercury from the combustion gas into the liquid phase. Elemental mercury, which is insoluble in water, is difficult to capture using existing air quality control devices. Accordingly, most elemental mercury control measures focus on converting elemental mercury into oxidized mercury. Mechanical methods such as fixed bed catalysts (e.g., SCRs), and chemical additives (e.g., calcium bromide, hydrogen bromide, ammonium chloride) have been developed that oxidize elemental mercury in the gas phase for subsequent capture with a WFGD. The captured mercury leaves the process via WFGD blow down.

As oxidized mercury is water soluble, WFGDs are theoretically capable of capturing nearly 100% of the oxidized mercury in a combustion gas. However, data collected by the Department of Energy (DOE) as well as numerous laboratory and commercial studies have shown lower capture efficiencies. The lower efficiencies are the result of reduction of oxidized mercury to elemental mercury (e.g., $Hg^{2+}$ to $Hg^0$) within the WFGD scrubber liquor. For example, one reduction reaction involves the oxidation of sulfite by ionic mercury in the WFGD to provide sulfate and elemental mercury. The result is an increase across the WFGD of elemental mercury content in the scrubbed combustion gas, and thus a decrease in total mercury capture as measured from fossil fuel to stack. This reduction of oxidized mercury in the scrubber and subsequent release is known in the industry as mercury re-emission. The loss in WFGD mercury capture efficiency due to mercury re-emission will prevent some EGUs from meeting emissions requirements, necessitating installation of additional capital equipment.

US 2011/243819 A1 discloses a uses for a composition comprising a polymer derived from at least two monomers: acrylic-x and an alkylamine, wherein said polymer is modified to contain a functional group capable of scavenging one or more compositions containing one or more metals are disclosed. These polymers have many uses in various mediums, including wastewater systems. US 2011/262326 A1 discloses a method for preventing re-emissions of mercury from a wet flue gas desulfurization (FGD) system by addition of an additive to the FGD scrubber liquor which interacts in the system scrubber with mercury present in the flue gas to curtail the mercury re-emissions; the mercury re-emissions are reduced to substantially zero by use of an additive selected from one or more members of the group consisting of a dithiol, a dithiolane, and a thiol having a single thiol group and either an oxygen or a hydroxyl group.

There is a need in the art for improved methods of controlling mercury re-emission, which can supplement or replace current approaches of reducing hazardous air pollutant emissions.

### SUMMARY

One aspect of the invention is a composition, comprising a mercury re-emission control additive; and a free radical scavenger, wherein the mercury re-emission control additive is a polymeric polydithiocarbamate compound; wherein the free radical scavenger is selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

According to the description, the mercury re-emission control additive may be an ethylene dichloride ammonia polymer containing from 5 to 55 mole % of dithiocarbamate salt groups.

According to the description, themercury re-emission control additive may be a polymer derived from at least two monomers: acrylic-x and an alkylamine, wherein said acrylic-x has the following formula:

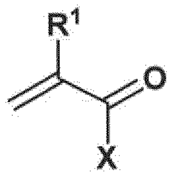

wherein X = OR, OH and salts thereof, or $NHR^2$ and wherein $R^1$ and $R^2$ is H or an alkyl or aryl group, wherein R is an alkyl or aryl group, wherein the molecular weight of said polymer is between 500 to 200,000, and wherein said polymer is modified to contain a functional group capable of scavenging one or more compositions containing one or more metals. The functional group capable of scavenging one or more compositions containing one or more metals may be a sulfur containing functional group.

According to the description, the mercury re-emission control additive may be selected from the group consisting of: a polymeric polydithiocarbamate compound, sodium sulfide, sodium hydrosulfide, sodium bisulfide, a polysulfide, diethyldithiocarbamate or a sodium salt thereof, dimethyldithiocarbamate or a sodium salt thereof, a sodium polythiocarbonate, an inorganic polysulfide or blend, a sodium or calcium salt of 1,3,5-triazine-2,4,6(1H,3H,5H)-trithione, an activated carbon, 2,3-dimercaptopropanol, dimercaptosuccinic acid, 1,8-octanedithiol, 1,2-dithiolane-3-valeric acid, 2-methyl 1,3-dithiolane, mercaptoacetic acid or a sodium salt thereof, and a halogen-containing compound, or any combination thereof.

According to the invention, the free radical scavenger is selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

According to the description, apolymer dispersant may be selected from the group consisting of: polyacrylic acid, polyacrylates, polymaleic acid, maleic anhydride/ethyl acrylate/vinyl acrylate terpolymer and alkyl epoxy carboxylate, phosphinocarboxylic acids, and phosphonocarboxylic acids, or any combination thereof.

The polymer dispersant may be a polyacrylate or a phosphinosuccinate oligomer.

Another aspect of the inventionis a method of controlling mercury re-emission from a combustion process and/or reducing corrosion of equipment used in a combustion process, the method comprising applying to the combustion process: a mercury re-emission additive; and a free radical scavenger, wherein the mercury re-emission control additive is a polymeric polydithiocarbamate compound;wherein the free radical scavenger is selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

The components may be applied to a scrubber liquor of a wet flue gas desulpherizer (WFGD). The percent mercury re-emission from the scrubber liquor may be reduced to 10% or less. The percent mercury re-emission from the scrubber liquor may be reduced to 1% or less.

According to the description, the mercury re-emission control additive may be an ethylene dichloride ammonia polymer containing from 5 to 55 mole % of dithiocarbamate salt groups.

According to the description, the mercury re-emission control additive may be a polymer derived from at least two monomers: acrylic-x and an alkylamine, wherein said acrylic-x has the following formula:

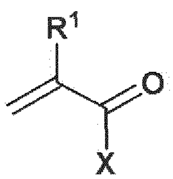

wherein X = OR, OH and salts thereof, or $NHR^2$ and wherein $R^1$ and $R^2$ is H or an alkyl or aryl group, wherein R is an alkyl or aryl group, wherein the molecular weight of said polymer is between 500 to 200,000, and wherein said polymer is modified to contain a functional group capable of scavenging one or more compositions containing one or more metals. The functional group capable of scavenging one or more compositions containing one or more metals may be a sulfur

containing functional group.

According to the description, the mercury re-emission control additive may be selected from the group consisting of: a polymericpolydithiocarbamate compounds, sodium sulfide, sodium hydrosulfide, sodium bisulfide, a poly-sulfide, diethyldithiocarbamate or a sodium salt thereof, dimethyldithiocarbamate or a sodium salt thereof, a sodium polythiocarbonate, an inorganic polysulfide or blend, a sodium or calcium salt of 1,3,5-triazine-2,4,6(1H,3H,5H)-trithione, an activated carbon, 2,3-dimercaptopropanol, dimercaptosuccinic acid, 1,8-octanedithiol, 1,2-dithiolane-3-valeric acid, 2-methyl 1,3-dithiolane, mercaptoacetic acid or a sodium salt thereof, and a halogen-containing compound, or any combination thereof.

According to the invention, the free radical scavenger may be selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

According to the description, a polymer dispersant may be selected from the group consisting of: polyacrylic acid, polyacrylates, polymaleic acid, maleic anhydride/ethyl acrylate/vinyl acrylate terpolymer and alkyl epoxy carboxylate, phosphinocarboxylic acids, and phosphonocarboxylic acids, or any combination thereof.

The polymer dispersant may be a polyacrylate or a phosphinosuccinate oligomer.

In another aspect of the description, a method of reducing mercury re-emission from a combustion process and/or reducing corrosion of equipment used in a combustion process is disclosed. The method may include dispersing manganese species; inhibiting the formation of persulfate species; or complexing mercury and/or manganese. The method may include at least two of dispersing manganese species; inhibiting the formation of persulfate species; and complexing mercury and/or manganese.

The compositions, methods, and processes are further described herein.

## BRIEF DESCRIPTION OF THE DRAWINGS

FIG. 1 depicts a diagram of a coal-fired power plant.
FIG. 2 depicts a diagram of a control strategy in a coal-fired power plant.
FIG. 3 depicts effect of oxidation-reduction potential on soluble manganese concentration.
FIG. 4 depicts effect of oxidation-reduction potential on soluble manganese concentration.
FIG. 5 depicts a correlation between oxidation-reduction potential and soluble manganese concentrations.
FIG. 6 depicts a correlation between soluble manganese and mercury re-emission.

## DETAILED DESCRIPTION

Disclosed herein are compositions and methods for controlling mercury emissions from a scrubber process and/or reducing corrosion of scrubber equipment. The compositions and methods include at least two components selected from a mercury re-emission additive and a free radical scavenger. The components may exhibit a synergistic effect for reducing mercury emissions and/or reducing corrosion.

The compositions and methods may control mercury emissions and/or corrosion by targeting one or more chemical species found in a combustion process, and in particular, species that lead to mercury re-emission and/or corrosion. Chemical species that can be targeted include, but are not limited to, persulfate species ($S_2O_8^{2-}$), manganese species (e.g., $Mn^{4+}$), mercury species (e.g., $Hg^0$), iron species, and free radical species (e.g., carbon dioxide anion radical). The disclosed compositions may target (e.g., bind to, inhibit formation of, or the like) one or more of these species. directly or indirectly.

The compositions provide several advantages over current technologies. In particular, the compositions can specifically target one or more species simultaneously, thereby providing reduced emissions and corrosion rates. The compositions can allow for specific components of the composition to focus on an intended target (e.g., mercury) without interference from another chemical species (e.g., manganese).

### 1. Definition of Terms

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention.

The term "mercury re-emission," as used herein, refers to the phenomenon when water-soluble oxidized mercury

($Hg^{2+}$) undergoes chemical reduction to water-insoluble elemental mercury ($Hg^0$) in a wet flue gas desulfurization (WFGD) scrubber. It is believed the reduction occurs because of a reaction between mercury ions and sulfite ions present in the WFGD liquor. Because elemental mercury is insoluble in water, it exits the scrubber in the gas-phase. Thus the elemental mercury concentration in the flue gas exiting the scrubber is higher than the elemental mercury concentration entering the scrubber,

The term "percent mercury re-emission," as used herein, refers to:

$$\%\ \text{Hg Re-emission} = \left( \frac{Hg^{0}_{outlet} - Hg^{0}_{inlet}}{Hg^{T}_{Inlet} - Hg^{0}_{Inlet}} \right) \times 100 \qquad \text{Equation A}$$

where "outlet" refers to EGU stack gas mercury measurement, "inlet" refers to gas concentrations at the inlet to the WFGD, "0" refers to the concentration of elemental mercury in the gas, and "T" refers to the total concentration of mercury in the gas. The "outlet" measurement may refer to mercury gas measurements made at any location after the gas has exited the WFGD.

The term "percent mercury oxidation," as used herein, refers to:

$$\%\ \text{Hg Oxidation} = \left( \frac{Hg^{T}_{inlet} - Hg^{0}_{inlet}}{Hg^{T}_{Inlet}} \right) \times 100 \qquad \text{Equation B}$$

where the super- and sub-scripts have the same meaning as defined in Equation A above.

The term "percent mercury capture," as used herein, refers to:

$$\%\ \text{Hg Capture} = \left( \frac{Hg^{T}_{Inlet} - Hg^{T}_{outlet}}{Hg^{T}_{Inlet}} \right) \times 100 \qquad \text{Equation C}$$

where the super- and sub-scripts have the same meaning as defined in Equation A above.

The term "oxidation-reduction potential," as used herein, refers to the summation of all the oxidation and reduction potentials in a given solution or scrubber liquor. As such, the oxidation-reduction potential varies depending on a liquor composition. Oxidation-reduction potential also depends on the fuel source of the electric generating unit, and operations of the wet flue gas desulfurizer (e.g., forced oxidation or natural, alkali source, purge rate).

The term "sulfite," as used herein, refers to $SO_3^{2-}$, and may have the structure shown below.

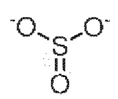

sulfite

The term "sulfite radical," as used herein, refers to $SO_3^{\bullet -}$, and may have the structure shown below.

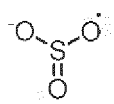

sulfite radical

The term "sulfate," as used herein, refers to $SO_4^{2-}$, and may have the structure shown below.

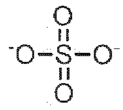

sulfate

The term "sulfate radical," as used herein, refers to $SO_4\bullet^-$, and may have the structure shown below.

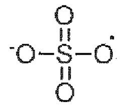

sulfate radical

The term "peroxymonosulfate radical," as used herein, refers to $SO_5\bullet^-$, and may have the structure shown below.

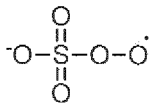

peroxymonosulfate radical

The term "persulfate," as used herein, refers to $S_2O_8^{2-}$, and may have the structure shown below.

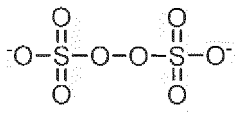

persulfate

The term "carbon dioxide," as used herein, refers to $CO_2$, and may have the structure shown below.

O=C=O

carbon dioxide

The term "carbon dioxide anion radical," as used herein, refers to $CO_2\bullet^-$, and may have the structure shown below.

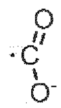

carbon dioxide anion radical

## 2. Targets for Reducing Mercury Re-emission and/or Corrosion

WFGD scrubber liquors contain multiple chemical species intended to react or interact with hazardous pollutants in order to prevent emission of the pollutants into the atmosphere. Within the liquor, a multitude of chemical reactions occur (e.g., oxidation/reductions), producing a variety of chemical species. Some of the reactions are favorable for reducing emissions, whereas others may result in mercury re-emission and/or corrosion, for example.

It has been discovered that several of these chemical species in a combustion gas and/or in a scrubber liquor can be targeted, directly or indirectly, to reduce mercury re-emissions and/or corrosion processes. In particular, persulfate species, transition metal species, and free radical species can be targeted to control mercury re-emission and /or

corrosion processes.

In addition, various mercury species can be directly targeted to reduce mercury re-emission, such as those shown in Scheme 1. Other chemical species that may be present and can optionally be targeted include, but are not limited to, chloride, bromide, fluoride, $HSO_3^-$, $CaSO_4$, $SeO_3^{2-}$, organic acids, $Mn^{2+}$, $Fe^{3+}$, and other species.

Scheme 1

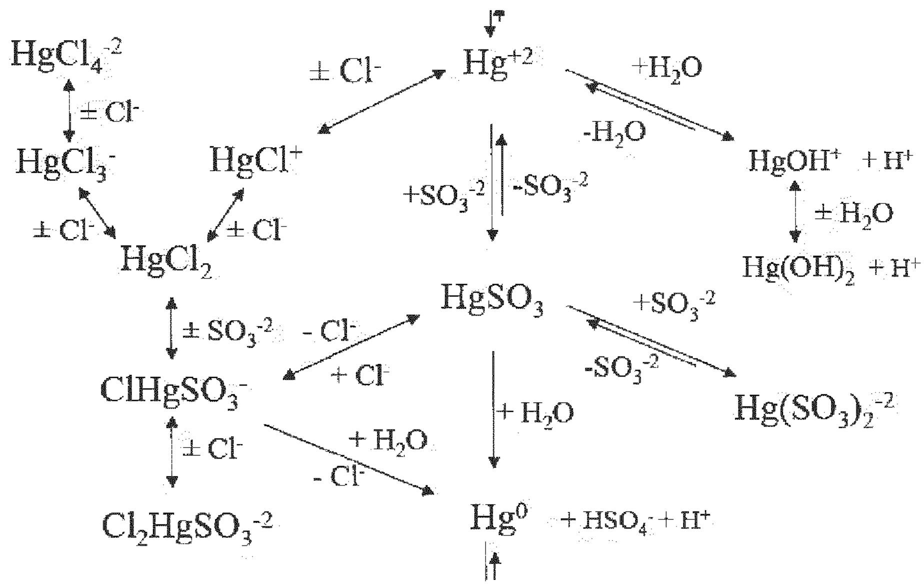


### a. Persulfate Species

Persulfate species present in WFGD scrubber liquors may be responsible for mercury re-emission. Persulfate species may also contribute to corrosion of scrubber equipment by increasing scrubber liquor oxidation-reduction potential, which leads to transition metal precipitation onto scrubber surfaces and galvanic corrosion.

Persulfate species ($S_2O_8^{2-}$) formation can be targeted to reduce mercury re-emissions and/or corrosion processes. In particular, constituents that lead to persulfate formation in WFGD scrubber liquors can be targeted to prevent formation of persulfate. The downstream activity of persulfate and species resulting from persulfate reaction, can also be targeted to reduce mercury re-emissions and/or corrosion processes. In particular, free radical species resulting from persulfate activity can be targeted to reduce mercury re-emissions and/or corrosion processes.

Persulfate species may cause mercury re-emission by initiating the reduction of ionic mercury species in the WFGD by oxidizing an organic acid (equation 1, dibasic acid (DBA) is shown as an example), which in turn yields $CO_2$ anion radical (equation 2), which reduces mercuric chloride, leading to mercury re-emission (equation 3).

$$S_2O_8^{2-} \rightarrow 2SO_4^{-\bullet} \qquad (1)$$

$$SO_4^{-\bullet} + C_2O_4^{2-} \text{ (DBA)} \rightarrow SO4^{2-} + CO_2^{-\bullet} + CO_2 \qquad (2)$$

$$CO_2^{-\bullet} + Hg^{2-} \rightarrow CO_2 + Hg^+ \qquad (3)$$

The persulfate species may be formed in the WFGD via catalytic reaction of sulfite species over Mn and/or Fe solid surfaces, especially at high redox potential over 400 mV. The reaction may be initiated by the transfer of an electron from a sulfite to a transition metal, such as iron or manganese, which are both in the +3 oxidation state.

The reaction yields a sulfite anion radical (equation 4).

$$M^{3+} + SO_3^{2-} \rightarrow M^{2+} + SO_3^{-\bullet} \qquad (4)$$

Reaction of the sulfite anion radical with oxygen produces peroxymonosulfate radical, which in turn reacts with another sulfite anion radical to produce persulfate (equations 5 and 6).

$$O_2 + SO_3^{\bullet -} \rightarrow SO_5^{\bullet -} \quad (5)$$

$$SO_5^{\bullet -} + SO_3^{\bullet -} \rightarrow S_2O_8^{2-} \quad (6)$$

While chloride species in the scrubber liquor act as scavengers for persulfate, the chlorine resulting from this scavenging can catalyze propagation reactions resulting in more sulfate radicals (equation 7), which may contribute to further persulfate production and mercury re-emission.

$$S_2O_8^{2-} + 2Cl^- \rightarrow 2SO_4^{2-} + Cl_2 \quad (7)$$

The oxidation of organics referred to above may also be responsible for releasing complexed mercury into the WFGD liquor, thus contributing to higher mercury re-emission.

**b. Manganese Species ($Mn^{4+}$ and $Mn^{2+}$)**

Manganese species, solid manganese species in particular, can contribute to mercury re-emission by catalyzing the formation of persulfate, which as described above, can lead to the reduction of ionic mercury to elemental mercury. Manganese species can also lead to corrosion of scrubber surfaces. $Mn^{4+}$ species can cause corrosion by precipitating out of WFGD scrubber liquors onto surfaces of the scrubber and acting as galvanic cathodes (e.g., $MnO_2$ deposits on WFGD alloys can act as galvanic cathodes to promote corrosion of the WFGD metal). These precipitated species can also catalyze the formation of persulfate (equation 4).

Manganese species can be targeted to reduce mercury re-emissions and/or corrosion processes. Manganese species that can be targeted include $Mn^{4+}$ species and $Mn^{2+}$ species. $Mn^{4+}$ species can be targeted by controlling the scrubber oxidation-reduction potential. Oxidation-reduction potential (ORP) has an influence on mercury re-emission and corrosion in combustion processes due to its strong influence on transition metal oxidation state within WFGD scrubber liquors. At high ORP, manganese may be in the $Mn^{4+}$ state and can precipitate out of the scrubber liquor onto WFGD surfaces, which leads to corrosion. When ORP is lowered, the manganese may be reduced to $Mn^{2+}$ and become soluble in the scrubber liquor.

The soluble $Mn^{2+}$ can be optionally be targeted for removal from the scrubber liquor, eliminating the possibility of oxidation back to $Mn^{4+}$ and its catalysis of persulfate formation. For example, both $Mn^{4+}$ and $Mn^{2+}$ can be targeted with binding agents to inactivate the metal surfaces for reaction. Such binding may prevent the reaction of the metals with sulfite, or engaging in other reactions that may contribute directly or indirectly to mercury re-emission and/or corrosion.

Targeting of persulfate species, as described above, can also be effective to reduce corrosion and/or mercury re-emission linked to $Mn^{4+}$ activity. For example, when Mn-caused corrosion takes place, a strong oxidizer such as persulfate may be present. The oxidizer can raise the oxidation-potential of the scrubber liquor and precipitate out more manganese onto WFGD surfaces, leading to further corrosion. By reducing or preventing persulfate formation, the oxidation-reduction potential can be lowered, which results in less solid manganese precipitation and corrosion.

**c. Free Radical Species**

Free radical species can be targeted to reduce mercury re-emissions and/or corrosion processes. Free radical species that can be targeted include sulfite anion radicals, peroxymonosulfate radicals, and carbon dioxide anion radicals. The free radical species may be involved in the production of persulfate, as well as subsequent reactions leading to reduction of ionic mercury to elemental mercury. As shown in equations 4-6, sulfite anion radicals and peroxymonosulfate radicals may contribute to the formation of persulfate species in WFGD scrubber liquors. Equation 3 shows that carbon dioxide anion radical may contribute to mercury re-emission by reducing mercury species in WFGD scrubber liquors. Consequently, a multitude of free radicals can be targeted.

**d. Mercury Species**

Mercury species can be directly targeted to reduce mercury re-emissions. Mercury species that can be targeted include elemental mercury and ionic mercury species. Ionic mercury can be targeted for removal from WFGD scrubber liquors, thereby minimizing the species available for participation in mercury re-emission processes.

**3. Composition & Method Design**

Based on the foregoing targets for reducing mercury re-emission and/or corrosion, compositions and methods are provided for targeting one or more of these species. The compositions and methods can include multiple components

to target multiple species that contribute to mercury re-emission and/or corrosion processes. The compositions and methods can include components that enhance the effectiveness of other components, and in particular, effectiveness at targeting a specific chemical species. The composition and method components may together exhibit a synergistic effect.

In certain embodiments, a composition or method of the invention may target persulfate in a WFGD scrubber liquor. Targeting persulfate may prevent or reduce mercury re-emission (equations 1-3). For example, a composition or method can target species that result in persulfate formation, or species resulting from persulfate activity leading to mercury re-emission. Targeting persulfate may also allow for control of scrubber liquor oxidation-reduction potential. In particular, reduction of the ORP may mitigate precipitation of manganese species and their corrosive effect.

In certain embodiments, a composition or method of the invention may target transition metal species, including precipitated transition metal species (e.g., $Mn^{4+}$). The composition may directly target transition metal species, or indirectly target said species by reducing oxidation-reduction potential of a WFGD scrubber liquor. The liquor, having a reduced ORP, may solubilize solid manganese, preventing its participation in corrosion of scrubber surfaces. Solubilizing the manganese may also prevent or minimize its reaction with sulfite, which would lead to persulfate formation (equation 4). The solubilized manganese can optionally be targeted by a composition or method of the invention, removing the manganese or inactivating the species in the scrubber liquor. The composition may bind to or flocculate the metal species to remove or inactivate it from the scrubber liquor. As such, the removed or inactivated metal will no longer be available to participate in corrosive processes and promotion of mercury re-emission. In certain embodiments, a composition or method of the invention can target mercury species, and in particular, can flocculate, chelate, or otherwise bind to ionic mercury species to prevent reduction of the mercury to elemental mercury.

In certain embodiments, a composition or method of the invention may target free radical species (e.g., $SO_3^{\bullet-}$, $SO_5^{\bullet-}$, $CO_2^{\bullet-}$). The composition or method may prevent or reduce free radical participation in processes leading to mercury re-emission (equations 1-3), and/or persulfate formation (equations 5 and 6). The composition or method may specifically target carbon dioxide anion radical to prevent its reaction with ionic mercury, which would lead to elemental mercury and re-emission.

In certain embodiments, a composition or method of the invention can target two or more of: persulfate species, transition metal species (Mn, Fe, Hg), free radical species, and oxidation-reduction potential.

Suitable approaches, according to the disclosure, for reducing mercury re-emission and/or controlling corrosion thus include:

(1) reducing the availability of metal species that can react with sulfite to produce persulfate (equation 4) by binding to or otherwise inactivating solid and/or solubilized metal species from further reactions (e.g., reduction of mercury to elemental mercury; reduction of sulfite to sulfite anion radical);
(2) reducing or preventing persulfate formation in the WFGD before it leads to mercury re-emission (equations 4-6);
(3) reducing or preventing persulfate initiated mercury re-emission by targeting downstream free radicals, such as carbon dioxide anion radical, which can react with and reduce ionic mercury (equation 3); and
(4) controlling the oxidation-reduction potential of WFGD scrubber liquors in order to reduce the amount of solid Mn/Fe deposited on scrubber surfaces.

## 4. Compositions for Reducing Mercury Re-emission and/or Corrosion

In one aspect, disclosed are compositions according to claim 1.

The compositions may reduce mercury emissions and/or corrosion by one or more of the following: reducing the availability of solid metal species (e.g., $Mn^{4+}$) that can react with sulfite leading to persurfate formation; reducing the amount of persulfate ($S_2O_8^{2-}$) species present in a WFGD scrubber liquor; reducing the amount of free radical species (e.g., carbon dioxide anion radical) present in a WFGD scrubber liquor; and/or controlling the oxidation-reduction potential of WFGD scrubber liquors in order to reduce the amount of solid Mn/Fe deposited on scrubber surfaces.

According to the description, one or more components of the disclosed compositions may bind to soluble mercury species and/or manganese species, thereby reducing mercury re-emission and/or corrosion of equipment used in the combustion process (e.g., a WFGD surface). In certain embodiments, the mercury re-emission additive and/or the polymer dispersant may bind to mercury species and/or manganese species. In certain embodiments, the composition includes a mercury re-emission additive configured to bind mercury species; and a polymer dispersant configured to bind manganese species.

The mercury re-emission additive may have a heavy metal selectivity of: Hg > Ag > Cd > Cu > Pb > Zn > Co(II) > Ni > Fe(II) > Mn. However, the manganese concentration in a scrubber liquor may be so high that it diminishes the effectiveness of a mercury re-emission additive, applied alone, to interact with and reduce emission of mercury species. A composition may include one component tailored to mercury (e.g., a mercury re-emission additive) and one component tailored to manganese (e.g., a polymer dispersant). The components may provide a synergistic effect for reducing

mercury re-emission and/or corrosion.

One or more components of the composition may reduce the oxidation-reduction potential of a scrubber liquor, thereby increasing soluble manganese species (e.g., $Mn^{2+}$) present in the scrubber liquor compared to insoluble manganese species (e.g., $Mn^{4+}$). Optionally, the soluble manganese species can be targeted (e.g., via binding) by the same or another component of the composition. By solubilizing the manganese, and optionally binding it, the disclosed compositions may provide a reduction in manganese corrosion on alloy surfaces (e.g., a WFGD surface), as well as a reduction in the ability of solid manganese to react with sulfite to form sulfate anion radical, which leads to persulfate formation. In certain embodiments, the composition includes a mercury re-emission additive configured to reduce the oxidation-reduction potential of a scrubber liquor; and a polymer dispersant configured to bind solubilized manganese species present in the scrubber liquor.

One or more components of the composition may react with free radical species (e.g., carbon dioxide radical anion) to interrupt processes that lead to mercury re-emission and/or corrosion of metal surfaces. For example, a free radical scavenger may react with carbon dioxide anion radical before it reduces ionic mercury present in the scrubber liquor.

The dosage of the disclosed compositions may vary as necessitated to reduce or prevent mercury re-emission and/or to reduce or prevent corrosion. The dosage amounts can be selected based on, for example, a measured ionic mercury concentration and/or oxidation-reduction potential of a scrubber liquor. Process medium quality and extent of process medium treatment are a couple of factors that can be considered by one of ordinary skill in the art in selecting dosage amount. A jar test analysis is a typical example of what is utilized as a basis for determining the amount of dosage required to achieve effective metals removal in the context of a process water medium, e.g. wastewater. The dosage of the compositions may range from 1 to 10,000 ppm actives, or 100 to 1,000 ppm actives.

**a. Mercury Re-emission Additives**

Mercury re-emission control additives that can be used with compositions of the invention include any additive suitable to reduce and/or prevent mercury re-emission from combustion processes, and in particular, scrubber liquors. In certain embodiments, the mercury re-emission additive may bind to or inactivate mercury. In certain embodiments, the mercury re-emission additive may be used to control scrubber liquor oxidation-reduction potential (e.g., reduce ORP). In certain embodiments, the mercury re-emission additive may be used to flocculate one or more metal species (e.g., mercury, iron, and/or manganese).

In certain embodiments according to the description, the mercury re-emission control additive may be a polymeric polydithiocarbamate compound (e.g., MerControl 8034, also referred to herein as "poly-DTC"), or another sulfur-containing additive such as sodium sulfide, sodium hydrosulfide, sodium bisulfide, or a polysulfide. In certain embodiments, the mercury re-emission additive may be a thiocarbonate or a polythiocarbonate. In certain embodiments, the mercury re-emission additive may be sodium polythiocarbonate. According to the invention, the mercury re-emission control additive is a polymeric polydithiocarbamate compound.

In certain embodiments of the description, the mercury re-emission control additive may be diethyldithiocarbamate or a sodium salt thereof. In certain embodiments of the description, the mercury re-emission control additive may be dimethyldithiocarbamate or a sodium salt thereof.

In certain embodiments of the description, the mercury re-emission control additive may be an inorganic polysulfide or blend, such as PRAVO, a product from Vosteen.

In certain embodiments of the description, the mercury re-emission additive may be a sodium or calcium salt of 1,3,5-triazine-2,4,6(1H,3H,5H)-trithione (also referred to as trimercapto-S-triazine), such as TMT-15, a product from Degussa.

In certain embodiments of the description, the mercury re-emission control additive may be an activated carbon, such as disclosed in US Patent 7,727,307 B2.

In certain embodiments of the description, the mercury re-emission control additive may be a dithiol, a dithiolane, or a thiol having a single thiol group and either an oxygen or a hydroxyl group. Suitable dithiols include, but are not limited to, 2,3-dimercaptopropanol, dimercaptosuccinic acid, and 1,8-octanedithiol. Suitable dithiolanes include, but are not limited to, 1,2-dithiolane-3-valeric acid and 2-methyl 1,3-dithiolane. Suitable thiols include, but are not limited to, mercaptoacetic acid and sodium salts thereof.

In certain embodiments of the description, the mercury re-emission control additive may be a halogen-containing compound. Suitable halogen-containing compounds include, but are not limited to, calcium bromide, sodium bromide, potassium bromide, hydrogen bromide, calcium iodide, and ammonium chloride.

In certain embodiments of the description, a combination of mercury re-emission controlled additives may be used. In one embodiment according to the invention, the mercury re-emission control additive is a polymeric polydithiocarbamate compound.

### (i) Ethylene Dichloride Ammonia Polymer Containing

### Dithiocarbamate Groups

According to the description, the mercury re-emission control additive may be a water-soluble ethylene dichloride ammonia polymer having a molecular weight of from 500 to 10,000, and containing from 5 to 55 mole % of dithiocarbamate salt groups to prevent re-emission of mercury across a WFGD.

According to the description, the polymer may be prepared by the reaction of ethylene dichloride and ammonia to provide a polyamine or polyimine. The polyamine or polyimine may have a molecular weight range of 500-100,000. In a preferred embodiment, the molecular weight may be 1,500 to 10,000, with the most preferred molecular weight range being 1,500 to 5,000.

The dithiocarbamate groups of the polymers may be introduced by the reaction of the polyamines or polyimines with carbon disulfide to produce polymeric dithiocarbamic acid or their salts. Such reaction is preferably carried out in a solvent such as water or alcohol at a temperature of from 30 °C and 100 °C for periods of time ranging between 1 and 10 hours. Good conversion may be obtained at temperatures between 40 ° and 70 °C for 2 to 5 hours.

The mole % of dithiocarbamate salt groups in the finished polymer may be within the range of 5 to 55%, 20 to 40 mole %, or 25 to 30 mole %. The salts include, but are not limited to, alkaline and alkali earth such as sodium, lithium, potassium or calcium.

The finished polymer may be applied to a combustion process at a ratio of 1:1 to 2000:1 weight copolymer to weight of mercury being captured. One preferred ratio may be from 5:1 to 1000:1 more preferably from 5:1 to 500:1.

### (ii) Acrylic-x and Alkylamine Polymer

According to the description, the mercury re-emission control additive may be a composition comprising a polymer derived from at least two monomers: acrylic-x and an alkylamine, wherein said acrylic-x has the following formula:

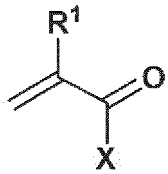

wherein X = OR, OH and salts thereof, or $NHR^2$ and wherein $R^1$ and $R^2$ is H or an alkyl or aryl group, wherein R is an alkyl or aryl group, wherein the molecular weight of said polymer is between 500 to 200,000, and wherein said polymer is modified to contain a functional group capable of scavenging one or more compositions containing one or more metals.

The metals can include zero valent, monovalent, and multivalent metals. The metals may or may not be ligated by organic or inorganic compounds. Also, the metals can be radioactive and nonradioactive. Examples include, but are not limited to, transition metals and heavy metals. Specific metals can include, but are not limited to: copper, nickel, zinc, lead, mercury, cadmium, silver, iron, manganese, palladium, platinum, strontium, selenium, arsenic, cobalt and gold.

The molecular weight of the polymers can vary. For example, the target species/application for the polymers can be one consideration. Another factor can be monomer selection. Molecular weight can be calculated by various means known to those of ordinary skill in the art. For example, size exclusion chromatography, as discussed in the examples below can be utilized. When molecular weight is mentioned, it is referring to the molecular weight for the unmodified polymer, otherwise referred to as the polymer backbone. The functional groups that are added to the backbone are not part of the calculation. Thus the molecular weight of the polymer with the functional groups can far exceed the molecular weight range. In one embodiment, the molecular weight of the polymer is from 1,000 to 16,000. In another embodiment, the molecular weight of said polymer is from 1,500 to 8,000.

According to the description, various functional groups can be utilized for metal scavenging. The following phraseology would be well understood by one of ordinary skill in the art: wherein said polymer is modified to contain a functional group capable of scavenging one or more compositions containing one or more metals. More specifically, the polymer is modified to contain a functional group that can bind metals. In one embodiment, the functional group contains a sulfide containing chemistry. In another embodiment, the functional group is a dithiocarbamate salt group. In another embodiment, the functional groups are at least one of the following: alkylene phosphate groups, alkylene carboxylic acids and salts thereof, oxime groups, amidooxime groups, dithiocarbamic acids and salts thereof, hydroxamic acids, or nitrogen oxides.

The molar amounts of the functional group relative to the total amines contained in the unmodified polymer can vary as well. For example, the reaction of 3.0 molar equivalents of carbon disulfide to a 1.0:1.0 mole ratio acrylic acid /

TEPA copolymer, which contains 4 molar equivalents of amines per repeat unit after polymerization, will result in a polymer that is modified to contain 75 mole % dithiocarbamate salt group. In other words, 75 % of the total amines in the unmodified polymer have been converted to dithiocarbamate salt groups.

In one embodiment of the description, the polymer may have between 5 to 100 mole % of the dithiocarbamate salt group. In a further embodiment of the description, the polymer has from 25 to 90 mole % of the dithiocarbamate salt group. In yet a further embodiment of the description, the polymer has from 55 to 80 mole % of the dithiocarbamate salt group.

According to the description, monomer selection will depend on the desired polymer. In one embodiment, the alkylamine is at least one of the following: an ethyleneamine, a polyethylenepolyamine, ethylcnediamine (EDA), diethylenetriamine (DETA), triethylenetetraamine (TETA), tetraethylenepetamine (TEPA) and pentaethylenehexamine (PEHA). In another embodiment, the acrylic-x is at least one of the following: methyl acrylate, methyl methacrylate, ethyl acrylate, and ethyl methacrylate, propyl acrylate, and propyl methacrylate. In another embodiment, the acrylic-x is at least one of the following: acrylic acid and salts thereof, methacrylic acid and salts thereof, acrylamide, and methacrylamide.

According to the description, the molar ratio between monomers that make up the polymer, especially acrylic-x and alkylamine can vary and depend upon the resultant polymer product that is desired. The molar ratio used is defined as the moles of acrylic-x divided by the moles of alkylamine. In one embodiment, the molar ratio between acrylic-x and alkylamine is from 0.85 to 1.5. In another embodiment, the molar ratio between acrylic-x and alkylamine is from 1.0 to 1.2. Various combinations of acrylic-x and alkylamines are encompassed by this invention as well as associated molecular weight of the polymers.

In one embodiment of the description, the acrylic-x is an acrylic ester and the alkylamine is PEHA or TEPA or DETA or TETA or EDA. In a further embodiment, the molar ratio between acrylic-x and alkylamine is from 0.85 to 1.5. In yet a further embodiment, the molecular weight can encompass ranges: 500 to 200,000, 1,000 to 16,000, or 1,500 to 8,000. In yet a further embodiment, the acrylic ester can be at least one of the following: methyl acrylate, methyl methacrylate, ethyl acrylate, and ethyl methacrylate, propyl acrylate, and propyl methacrylate, which is combined with at least one of the alklyamines, which includes PEHA or TEPA or DETA or TETA or EDA. In yet a further embodiment, the resulting polymer is modified to contain the following ranges of dithiocarbamate salt groups: 5 to 100 mole %, 25 to 90 mole %, or 55 to 80 mole %.

In another embodiment of the description, the acrylic-x is an acrylic amide and the alkylamine is TEPA or DETA or TETA or EDA. In a further embodiment, the molar ratio between acrylic-x and alkylamine is from 0.85 to 1.5. In yet a further embodiment, the molecular weight can encompass ranges: 500 to 200,000, 1,000 to 16,000, or 1,500 to 8,000. In yet a further embodiment, the acrylic amide can be at least one or a combination of acrylamide and methacrylamide, which is combined with at least one of the alklyamines, which includes PEHA or TEPA or DETA or TETA or EDA. In yet a further embodiment, the resulting polymer is modified to contain the following ranges of dithiocarbamate salt groups: 5 to 100 mole %, 25 to 90 mole %, or 55 to 80 mole %.

In another embodiment of the description, the acrylic-x is an acrylic acid and salts thereof and the alkylamine is PEHA or TEPA or DETA or TETA or EDA. In a further embodiment, the molar ratio between acrylic-x and alkylamine is from 0.85 to 1.5. In yet a further embodiment, the molecular weight can encompass ranges: 500 to 200,000, 1,000 to 16,000, or 1,500 to 8,000. In yet a further embodiment, the acrylic acid can be at least one or a combination of acrylic acid or salts thereof and methacrylic acid or salts thereof, which is combined with at least one of the alklyamines, which includes TEPA or DETA or TETA or EDA. In yet a further embodiment, the resulting polymer is modified to contain the following ranges of dithiocarbamate salt groups: 5 to 100 mole %, 25 to 90 mole %, or 55 to 80 mole %.

According to the description, additional monomers can be integrated into the polymer backbone made up of constituent monomers acrylic-x and alkylamine. A condensation polymer reaction scheme can be utilized to make the basic polymer backbone chain. Various other synthesis methods can be utilized to functionalize the polymer with, for example, dithiocarbamate and/or other non-metal scavenging functional groups. One of ordinary skill in the art can functionalize the polymer without undue experimentation.

In certain embodiments of the description, the composition can be formulated with other polymers such as a water soluble ethylene dichloride ammonia polymer having a molecular weight of from 500 to 100,000 which contains from 5 to 55 mole % of dithiocarbamate salt groups. In one embodiment, the molecular weight of the polymer is from 1,500 to 10,000 and contains 15 to 50 mole % of dithiocarbamate salt groups. In a preferred embodiment, the molecular weight of the polymer is from 1,500 to 5,000 and contains 30 to 55 mole % of dithiocarbamate salt groups.

**In** certain embodiments of the description, the composition can be formulated with other small molecule sulfide precipitants such as sodium sulfide, sodium hydrosulfide, TMT-15® (sodium or calcium salts of trimercapto-S-triazine), dimethyldithiocarbamate, and/or diethyldithiocarbamate.

The mercury re-emission additives may be present in the composition in an amount of 0 wt% to 99 wt%, 20 wt% to 80 wt%, or 50 wt% to 60 wt%. The mercury re-emission additives may be present in the composition in an amount of 10 wt%, 20 wt%, 30 wt%, 40 wt%, 50 wt%, 60 wt%, 70 wt%, 80 wt%, or 90 wt%. The mercury re-emission additive

may be present in an amount of 50 wt%, 60 wt%, or 80 wt%.

### b. Free Radical Scavengers

According to the invention, free radical scavengers are used to reduce mercury re-emission and/or corrosion. The free radical scavengers can be used to target free radical species that lead to persulfate formation (e.g., reduction of sulfite) or that lead to mercury re-emission (e.g., reduction of $Hg^{2+}$).

Free radical scavengers that can be used in the compositions of the description include, but are not limited to, substituted phenols (e.g., butylated hydroxytoluene, 2,6-di-tert-butylphenol, 2,4-dimethyl-6-tert-butylphenol), derivatives of phenylenediamine (e.g., N,N'-di-2-butyl-1,4-phenylenediamine), butylated hydroxyanisole (BHA), butylated hydroxytoluene (BHT), citric acid, tertiary butylhydroquinone (TBHQ), tocopherols, ascorbic acid, glutathione, lipoic acid, uric acid, and enzymes (e.g., catalase, superoxide dismutase, various peroxidases, and the like).

Free radical scavengers that can be used in the compositions of the invention are selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

The free radical scavenger may be present in the composition in an amount of 0 wt% to 99 wt%, 1 wt% to 30 wt%, 1 wt% to 25 wt%, 1 wt% to 20 wt%, or 1 wt% to 10 wt%. The free radical scavenger may be present in the composition in an amount of 1 wt%, 5 wt%, 10 wt%, 15 wt%, 20 wt%, 25 wt%, or 30 wt%. The free radical scavenger may be present in the composition in an amount of 1 wt%, 10 wt%, 20 wt%, or 25 wt%.

### c. Polymer Dispersants

Polymer dispersants can be used to reduce mercury re-emission and/or corrosion. The polymer dispersants can be used to target one or more transition metal species. The dispersants can be used to bind to or inactive mercury species, iron species, and/or manganese species (e.g., solubilized $Mn^{2+}$).

The compositions disclosed herein may include a polymer dispersant. Suitable polymer dispersants include, but arc not limited to, polyacrylic acid, polyacrylates, polymaleic acid, maleic anhydride/ethyl acrylate/vinyl acrylate terpolymer and alkyl epoxy carboxylate (abbreviated "AEC"), phosphinocarboxylic acids, such as phosphinosuccinate oligomers (abbreviated as "PSO"), and phosphonocarboxylic acids, such as phosphonocarboxylic (sulfonated) copolymer (abbreviated "POCA", sold as Belclene 494).

The polymer dispersants may also be referred to herein as "binding agents."

The polymer dispersant may be present in the composition in an amount of 0 wt% to 99 wt%, 10 wt% to 50 wt%, or 20 wt% to 40 wt%. The dispersant may be present in the composition in an amount of 5 wt%, 10 wt%, 15 wt%, 20 wt%, 25 wt%, 30 wt%, 35 wt%, 40 wt%, 45 wt%, or 50 wt%. The dispersant may be present in the composition in an amount of 10 wt%, 19 wt%, 20 wt%, 25 wt%, 40 wt%, or 50 wt%.

### d. Dosage

In one embodiment, the amount of mercury re-emission control additive for effectively removing metals from contaminated waters may be within the range of 0.2 to 2 moles of dithiocarbamate per mole of metal, or 1 to 2 moles of dithiocarbamate per mole of metal contained in the water. According to one embodiment, the dosage of metal removal polymer required to chelate and precipitate 100 ml of 18 ppm soluble copper to 1 ppm or less was 0.011 gm (11.0 mg) of polymer. The metal polymer complexes formed are self-flocculating and quickly settle. These flocculants are easily separated from the treated water.

In the context of applying the polymer to a gas system, such as a flue gas, the polymer can be dosed incrementally and capture rates for a particular metal, e.g. such as mercury, can be calculated by known techniques in the art. In certain embodiments, a mercury re-emission control additive, such as a water-soluble ethylene dichloride ammonia polymer with dithiocarbamate salt groups, may be applied to a scrubber liquor at a ratio of 1:1 to 2000:1 weight of polymer to weight of mercury being captured. One preferred dosage ratio is from 5:1 to 1000:1, more preferably from 5:1 to 500:1.

## 5. Applications

Methods of the present invention can be used in any process in which it is desirable to remove mercury from a flue gas and/or prevent or reduce corrosion of equipment used in combustion processes. For example, the methods of the present invention can be used in waste incineration plants (e.g., domestic waste, hazardous waste, or sewage sludge incineration plants), power stations (e.g., bituminous coal-fired, or lignite-fired power stations), other plants for high-temperature processes (e.g., cement burning), and high-temperature plants co-fired with waste or combined (multistage) high-temperature plants (e.g., power stations or cement rotary kilns having an upstream waste pyrolysis or waste gasification.

FIG. 1 depicts an exemplary coal-fired power plant amenable to methods of the present invention. The power plant includes a boiler 10, a selective catalytic reduction device 20, an air preheater 30, a particulate control device 40 (e.g., an electrostatic precipitator), a scrubber 50 (e.g., a wet or dry flue gas desulpherization system), and a discharge stack 60. The coal-fired power plant may have additional components, as well as multiple devices of the same or similar type (e.g., multiple particulate control devices). The compositions of the invention can be applied upstream of the scrubber, and/or directly to the scrubber (e.g., to the scrubber liquor).

FIG. 2 depicts another exemplary EGU that includes a method of introducing a composition of the invention into a WFGD. The unit may include a controller and sensor array that can be used to measure one or more properties of the liquor (e.g., oxidation-reduction potential, heavy metal speciation, and the like). The addition of a composition of the invention can be adjusted based on the measured property to account for increased emissions, excessive corrosion, or alternatively, over-feed of the composition.

Methods of the present invention can be used in processes of any dimension. The methods can be used in processes having a flue gas volumetric flow rate of $15 \times 10^3$ $m^3$ S.T.P. db/h, for example for sewage sludge incineration, or of $50\times10^3$ $m^3$ S.T.P. db/h, for example in hazardous waste incineration plants, or of $150\times10^3$ $m^3$ S.T.P. db/h, for example in domestic waste incineration, and also in large power stations having, for example, $2\text{-}3\times10^6$ $m^3$ S.T.P. db/h.

The methods can be used with any scrubbers currently used in the industry, including spray towers, jet bubblers, and co-current packed towers. These types of particulate control devices are provided as examples and are not meant to represent or suggest any limitation.

The compositions may be introduced into a scrubber and thereby into the scrubber liquor via several routes. For example, the compositions may be added to a virgin limestone or lime slurry prior to addition to a scrubber, to the recirculation loop of a scrubber liquor, or to a "low solids" return to a scrubber from the scrubber purge stream. The addition of the compositions can be made in any suitable location in a scrubber process, wholly or fractionally (i.e. a single feed point or multiple feed points), including but not limited to the make-up water for the lime or limestone slurry or the scrubber liquor.

In certain embodiments, the compositions may be added to a wet scrubber via a "low solids" liquor return. A portion of the liquor is usually continuously removed from the scrubber for the purpose of separating reaction byproducts from unused lime or limestone. One means of separation that is currently used is centrifugation. In this process the scrubber liquor is separated into a "high solids" and "low solids" stream. The high solids stream is diverted to wastewater processing. The low solids fraction returns to the wet scrubber and can be considered "reclaimed" dilute liquor. The compositions can conveniently be added to the reclaimed low solids stream prior to returning to the scrubber.

In certain embodiments, the compositions may be added to the wet scrubber via a "virgin liquor." Virgin liquor is the water-based dispersion of either lime or limestone prior to exposure to flue gas and is used to add fresh lime or limestone while maintaining the scrubber liquor level and efficiency of the wet FGD. This is prepared by dispersing the lime or limestone in water. Here the composition can be added either to the dispersion water or the virgin liquor directly.

In certain embodiments, the compositions may be added to scrubber liquor injected directly into the flue gas prior to the scrubber for the purpose of controlling relative humidity of the flue gas or its temperature.

The scrubber liquors referred to herein may be water-based dispersions of calcium carbonate (limestone) or calcium oxide (lime) used in a wet Flue Gas Scrubber to capture SOx emissions. The liquor may also contain other additives such as magnesium and low-molecular weight organic acids, which function to improve the sulfur capture. One example of such an additive is a mixture of low-molecular weight organic acids known as dibasic acid (DBA). DBA consists of a blend of adipic, succinic, and glutaric acids. Each of these organic acids can also be used individually. In addition, another low-molecular weight organic acid that can be used to improve sulfur capture in a wet scrubber is formic acid. Finally, the scrubber liquor may also contain byproducts of the interaction between the lime or limestone and sulfur species, which leads to the presence of various amounts of calcium sulfite or calcium sulfate. The scrubber liquor may include the make-up liquor, return liquor, the reclaimed liquor, virgin liquor, and/or liquor injected directly into flue gasses.

## 6. Examples

The foregoing may be better understood by reference to the following examples, which are presented for purposes of illustration and are not intended to limit the scope of the invention.

Example 1

Metal solubility. ORP, and Hg re-emission

It has been shown that as ORP is decreased in WFGD scrubber liquor, soluble Mn concentration increases (FIG. 3 and FIG. 4). The soluble Mn can be targeted with a binding agent and/or a mercury re-emission additive to blind the Mn surfaces to further reaction. As shown in Table 1, the oxidation-reduction potential of a scrubber liquor of a WFGD resulted in an increase in soluble Mn and Fe levels, decreasing the amount of these species present in the solids (gypsum) of the WFGD liquor.

Table 1. Soluble and insoluble Mn and Fe, chloride concentrations, ORP, Hg re-emission and additive feed.

| Day | | Day 1 | Day 11 | Day 18 | Day 29 | Day 32 |
|---|---|---|---|---|---|---|
| Soluble Manganese (Mn) | mg/L | 3.9 | 67 | 20 | 32 | 53 |
| Soluble Iron (Fe) | mg/L | <0.2 | <0.2 | <0.2 | <0.2 | <0.2 |
| Insol. Iron (Fe) | mg/kg | - | 1700 | 1400 | 2300 | 3200 |
| Insol. Manganese (Mn) | mg/kg | - | 32 | 120 | 120 | 59 |
| Chloride (Cl) | mg/L | 2800 | 2900 | 2500 | 2500 | 2700 |
| Soluble Hg | ppt | 80258 | 275 | 10742 | 14394 | 136 |
| Hg re-emission | % | 61.67% | 17.52% | 30.52% | 246.51% | 5.73% |
| polymeric polydithiocarbamate mercury re-emission additive | GPH | 0 | 54 | 0 | 0 | 54 |
| ORP - Controller | mV | 535 | 190 | 493 | 502 | 180 |

The addition of persulfate to a scrubber liquor of a WFGD led to an increase in the amount of soluble mercury, which has been shown to result in mercury re-emission. This may be due to persulfate oxidizing organic matter, which agglomerate mercury species to larger particles (e.g., colloidal particles) and thus making it soluble, as shown in Table 2. Table 3 also shows the correlation between persulfate and soluble mercury levels, as well as ORP.

Table 2. Soluble mercury levels within scrubber liquor with and without addition of persulfate.

| Liquor | Mercury (liquid)/ppt |
|---|---|
| Scrubber Liquor | 404 |
| Scrubber Liquor + 0.5g $Na_2S_2O_8$ | 19547 |

Table 3. Soluble mercury levels within scrubber liquor

| Date and Time | Sample Name | Mercury (liquid, ppt) | Mercury (solids, ppb) | Persulfate conc. (ppm) | ORP (mV) | Stack Hg (ug/ wscm) |
|---|---|---|---|---|---|---|
| Day 1 | 1, AM | 224 | 790 | 21 | - | 0.17 |
| Day 1, 15: 22 | 1, PM | 84 | 800 | 35 | 177 | 0.18 |
| Day 2, 10: 00 | 2, AM | 26332 | 640 | 63 | 194 | 2.62 |
| Day 2, 13: 45 | 2, PM | 620 | 770 | 70 | 181 | 0.22 |
| Day 3, 7:30 | 3, AM | 114359 | 460 | 175 | 551 | 2.01 |
| Day 3, 13: 00 | 3, PM | 113331 | 350 | 525 | 538 | 3.73 |

(continued)

| Date and Time | Sample Name | Mercury (liquid, ppt) | Mercury (solids, ppb) | Persulfate conc. (ppm) | ORP (mV) | Stack Hg (ug/wscm) |
|---|---|---|---|---|---|---|
| Day 4, 8:05 | 4, AM | 125123 | 250 | 1050 | 544 | - |
| Day 4, 13:40 | 4, PM | 126977 | 260 | 1225 | 550 | - |

Correlating the soluble Mn concentration with mercury re-emission as well as with oxidation-reduction potential, relationships appear to be present (R2 values = ~0.72), as shown in FIG. 5 and FIG. 6. Reducing the amount of solid Mn and Fe surface species present by solubilizing them consequently leads to a reduction of catalytic active sites for the formation of the sulfite radical and thus limits the formation of persulfate.

The addition of a Mn/Fe binding agent has the ability to blind the surface from sulfites, leading to a decrease in the transition metal's ability to convert sulfite to persulfate. As shown in Table 1, although the insoluble Fe and Mn levels are high at Day 1, mercury re-emission levels during this time (+/- 2 hours) were very low. It can be inferred that the low mercury re-emission observed was due to the polymeric polydithiocarbamate mercury re-emission additive blinding the solid Mn and Fe surfaces, preventing persulfate formation.

The polymeric polydithiocarbamate mercury re-emission additive has however been shown to have a lower affinity for Mn and Fe over other cations (e.g., $Hg^{2+}$). Other polymers, such as polyacrylate have higher affinities for Mn and Fe than the polymeric polydithiocarbamate mercury re-emission additive, and thus were investigated in their ability to bind to Mn and Fe within WFGD scrubber liquors. When adding polymeric polydithiocarbamate mercury re-emission additive or polyacrylate to a scrubber liquor containing persulfate, it was possible to significantly reduce the soluble mercury concentration, likely due to flocculation. The decrease in soluble mercury has been demonstrated to be accompanied by a significant drop in ORP value. A drop in ORP value has been demonstrated to lead to an increase in soluble Mn species. Indeed, when polymeric polydithiocarbamate mercury re-emission additive is added this phenomenon is observed, as shown in Table 4. However, with polyacrylate, no real increase in soluble Mn species is observed. It appears thus that polyacrylate indeed complexes the Mn species, leading to a low soluble Mn concentration. It can be envisaged that the same occurred on the solid Mn surfaces, deactivating them for catalytic activity in converting sulfites to persulfate.

Table 4. Jar tests showing the effect of polymers on scrubber liquor

| Liquor | Mercury (liquid) /ppt | Soluble Mn/ppm |
|---|---|---|
| Scrubber Liquor + 0.5g $Na_2S_2O_8$ | 19547 | 0.1 |
| Scrubber Liquor + 0,5g $Na_2S_2O_8$ + 0.1g polymeric polydithiocarbamate mercury re-emission additive | 196 | 3.2 |
| Scrubber Liquor + 0.5g $Na_2S_2O_8$ + 0.1g polyacrylate | 54 | 0.2 |

The foregoing examples demonstrate that the compositions and methods may be used to reduce mercury re-emissions and/or control corrosion. Exemplary compositions of the description may be prepared according to Table 5.

Table 5. Exemplary Compositions

| | Mercury Re-emission Control Additive (wt%) | Free Radical Scavenger (wt%) | Polymer Dispersant (wt%) |
|---|---|---|---|
| Composition A | 50 | 25 | 25 |
| Composition B | 80 | 10 | 10 |
| Composition C | 80 | - | 20 |
| Composition D | 50 | - | 50 |
| Composition E | 80 | 1 | 19 |
| Composition F | 60 | 20 | 20 |
| Composition G | 60 | 1 | 40 |

Furthermore, the invention encompasses any and all possible combinations of some or all of the various embodiments described herein.

## Claims

1. A composition comprising a mercury re-emission control additive; and
a free radical scavenger,
wherein the mercury re-emission control additive is a polymeric polydithiocarbamate compound;
wherein the free radical scavenger is selected from the group consisting of:
substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

2. A method of controlling mercury re-emission from a combustion process and/or reducing corrosion of equipment used in a combustion process, the method comprising applying to the combustion process:

   a mercury re-emission additive; and
   a free radical scavenger,
   wherein the mercury re-emission control additive is a polymeric polydithiocarbamate compound:
   wherein the free radical scavenger is selected from the group consisting of: substituted phenols, derivatives of phenylenediamine, butylated hydroxyanisole (BHA), butylated hydroxytoluene (BHT), citric acid, tertiary butylhydroquinone (TBHQ), tocopherols, ascorbic acid, glutathione, lipoic acid, uric acid, and free radical scavenging enzymes, or any combination thereof.

3. The method of claim 2, wherein the components are applied to a scrubber liquor of a wet flue gas desulphurization (WFGD) unit.

4. The method of claim 2, wherein the percent mercury re-emission from the scrubber liquor is reduced to 10% or less, preferably wherein the percent mercury re-emission from the scrubber liquor is reduced to 1% or less.

## Patentansprüche

1. Zusammensetzung, umfassend ein Quecksilber-Reemissions-Regeladditiv; und einen Fänger freier Radikale,
wobei das Quecksilber-Reemissions-Regeladditiv eine polymere Polydithiocarbamatverbindung ist;
wobei der Fänger freier Radikale ausgewählt ist aus der Gruppe bestehend aus:
substituierten Phenolen, Derivaten von Phenylendiaminen, Butylhydroxyanisol (BHA), Butylhydroxytoluol (BHT), Citronensäure, Tertiär-Butylhydrochinon (TBHQ), Tocopherolen, Ascorbinsäure, Glutathion, Liponsäure, Harnsäure und freie Radikale fangenden Enzymen oder jeglichen Kombinationen daraus.

2. Verfahren zum Regeln der Quecksilber-Reemission aus einem Verbrennungsvorgang und/oder zum Verringern von Korrosion an einer in einem Verbrennungsvorgang eingesetzten Ausrüstung, wobei das Verfahren das Anwenden von Folgendem in dem Verbrennungsvorgang umfasst:

   einem Quecksilber-Reemissions-Additiv; und
   einem Fänger freier Radikale,
   wobei das Quecksilber-Reemissions-Regeladditiv eine polymere Polydithiocarbamatverbindung ist;
   wobei der Fänger freier Radikale ausgewählt ist aus der Gruppe bestehend aus:
   substituierten Phenolen, Derivaten von Phenylendiaminen, Butylhydroxyanisol (BHA), Butylhydroxytoluol (BHT), Citronensäure, Tertiär-Butylhydrochinon (TBHQ), Tocopherolen, Ascorbinsäure, Glutathion, Liponsäure, Harnsäure und freie Radikale fangenden Enzymen oder jeglichen Kombinationen daraus.

3. Verfahren nach Anspruch 2, wobei die Komponenten an einer Gaswäscherflüssigkeit einer nassen Rauchgasentschwefelungsanlage (WFGD) angewandt werden.

4. Verfahren nach Anspruch 2, wobei die prozentuale Quecksilber-Reemission aus der Gaswäscherflüssigkeit auf höchstens 10 % verringert wird,

vorzugsweise wobei die prozentuale Quecksilber-Reemission aus der Gaswäscherflüssigkeit auf höchstens 1% verringert wird.

## Revendications

1. Composition comprenant un additif de régulation de réémission de mercure ; et un piégeur de radicaux libres, dans laquelle l'additif de régulation de réémission de mercure est un composé polydithiocarbamate polymère ; dans laquelle le piégeur de radicaux libres est choisi dans le groupe constitué par : les phénols substitués, les dérivés de la phénylènediamine, l'hydroxyanisole butylé (BHA), l'hydroxytoluène butylé (BHT), l'acide citrique, la butylhydroquinone tertiaire (TBHQ), les tocophérols, l'acide ascorbique, la glutathione, l'acide lipoique, l'acide urique et les enzymes piègeuses de radicaux libres ou une combinaison de ces ceux-ci.

2. Procédé de régulation de réémission de mercure à partir d'un processus de combustion et/ou de réduction de la corrosion des équipements utilisés dans un processus de combustion, le procédé comprenant l'application au processus de combustion :

   d'un additif de réémission de mercure ; et
   un piégeur de radicaux libres,
   dans lequel l'additif de régulation de réémission de mercure est un composé polydithiocarbamate polymère ;
   dans lequel le piégeur de radicaux libres est choisi dans le groupe constitué par : les phénols substitués, les dérivés de la phénylènediamine, l'hydroxyanisole butylé (BHA), l'hydroxytoluène butylé (BHT), l'acide citrique, la butylhydroquinone tertiaire (TBHQ), les tocophérols, l'acide ascorbique, la glutathione, l'acide lipoique, l'acide urique et les enzymes piégeuses de radicaux libres ou une combinaison de ces ceux-ci.

3. Procédé selon la revendication 2, dans lequel les composants sont appliqués à une liqueur de laveur d'une unité de désulfuration de gaz de carneau humide (WFGD).

4. Procédé selon la revendication 2, dans lequel le pourcentage de réémission de mercure de la liqueur de laveur est réduit à 10 % ou moins,
   de préférence dans lequel le pourcentage de réémission de mercure de la liqueur de laveur est réduit à 1 % ou moins.

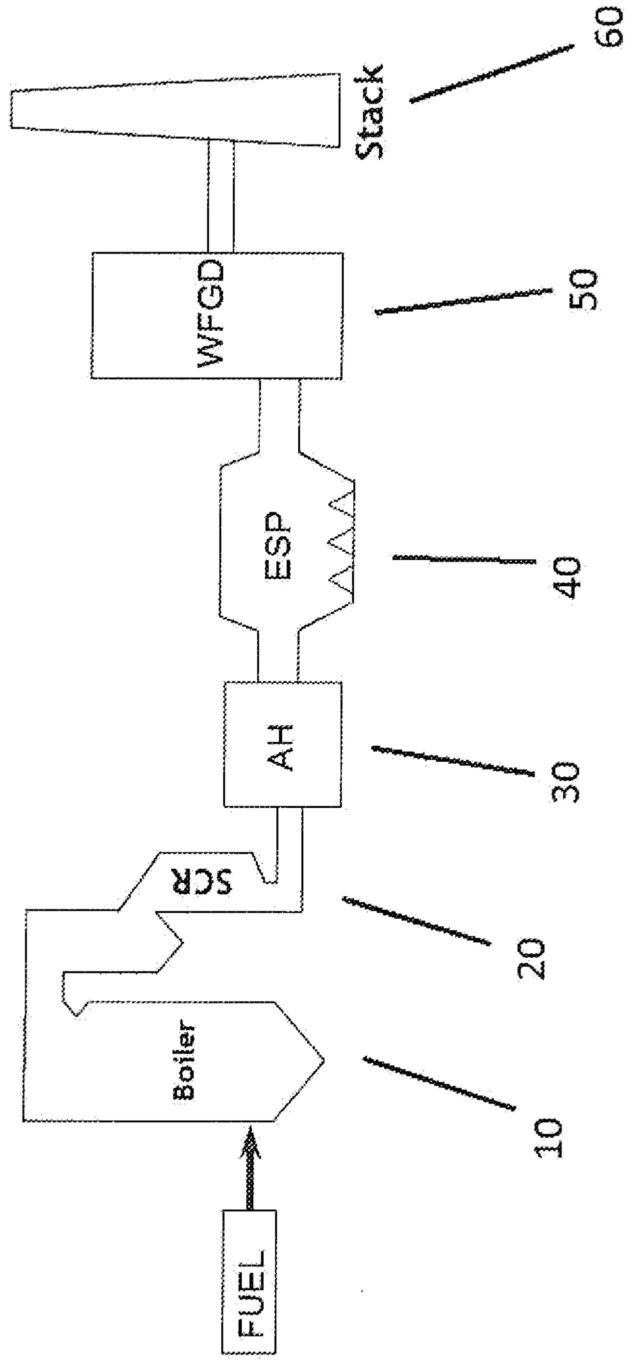


FIG. 1

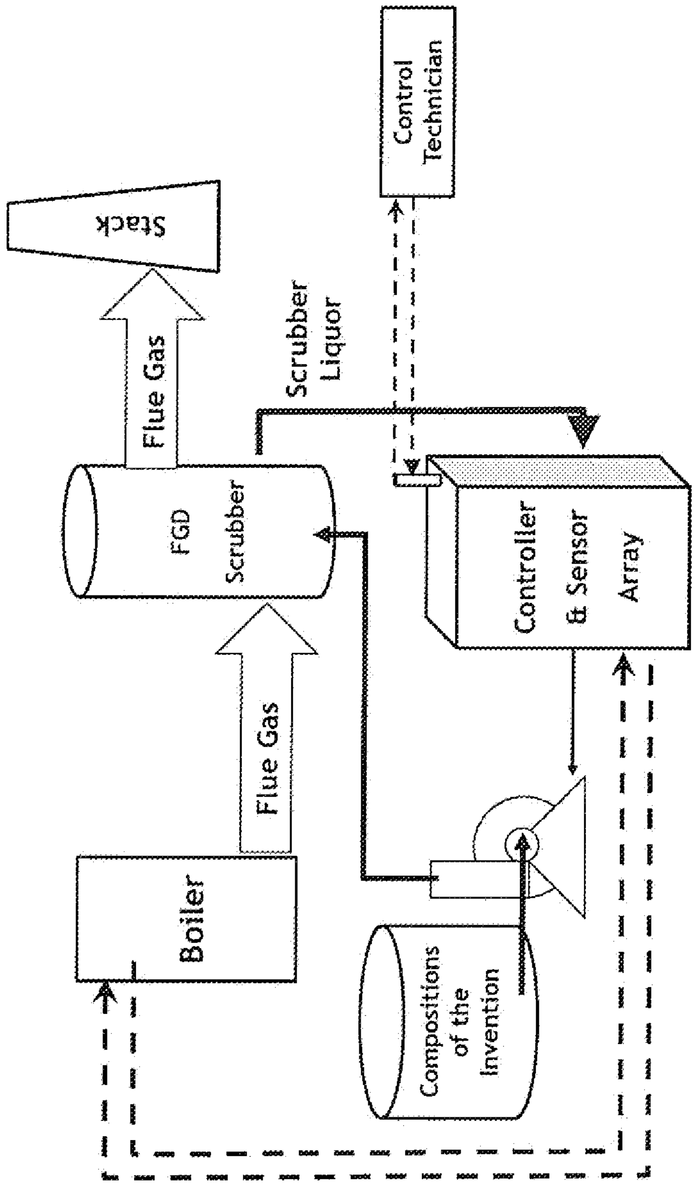
Stack
Control Technician
Flue Gas
Scrubber Liquor
FGD Scrubber
Controller & Sensor Array
Flue Gas
Boiler
Compositions of the Invention

FIG. 2

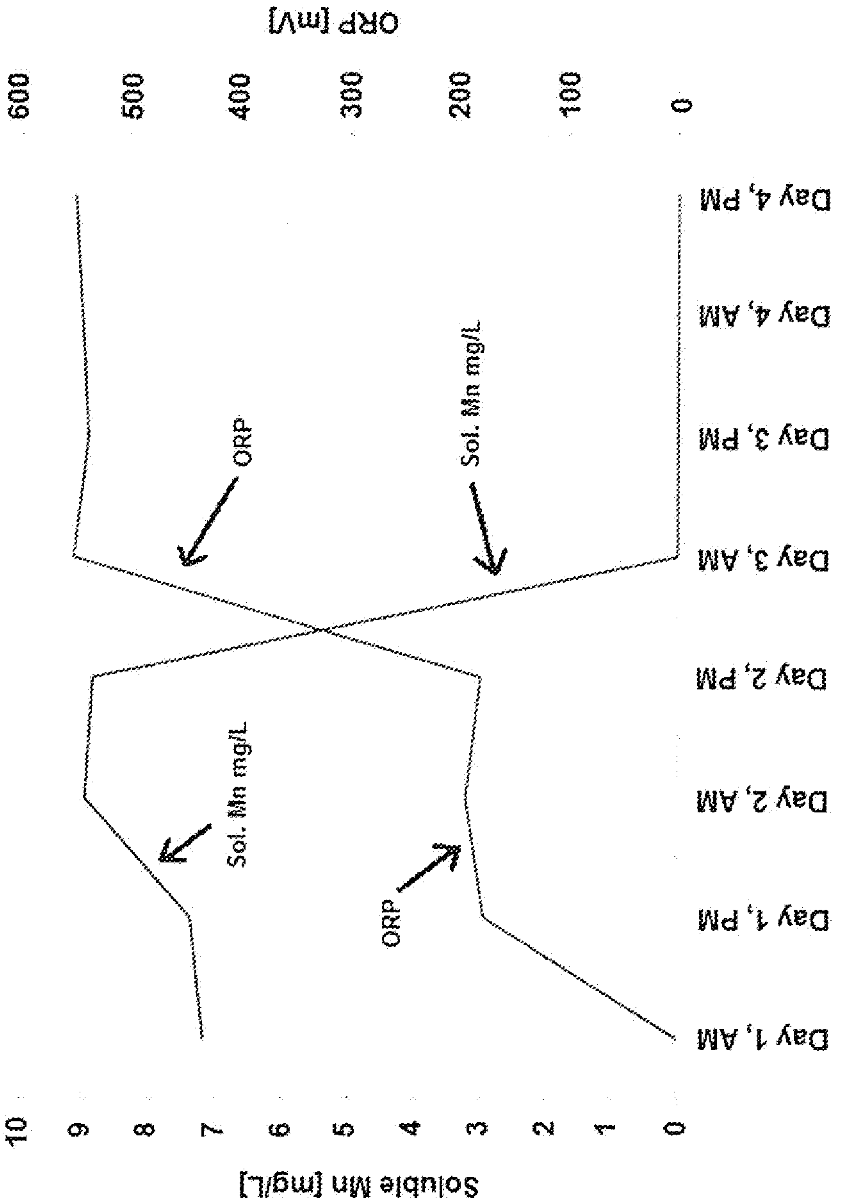
ORP [mV]
600
500
400
300
200
100
0
Soluble Mn [mg/L]
10
9
8
7
6
5
4
3
2
1
0
Day 1, AM
Day 1, PM
Day 2, AM
Day 2, PM
Day 3, AM
Day 3, PM
Day 4, AM
Day 4, PM
ORP
Sol. Mn mg/L
ORP
Sol. Mn mg/L

FIG. 3

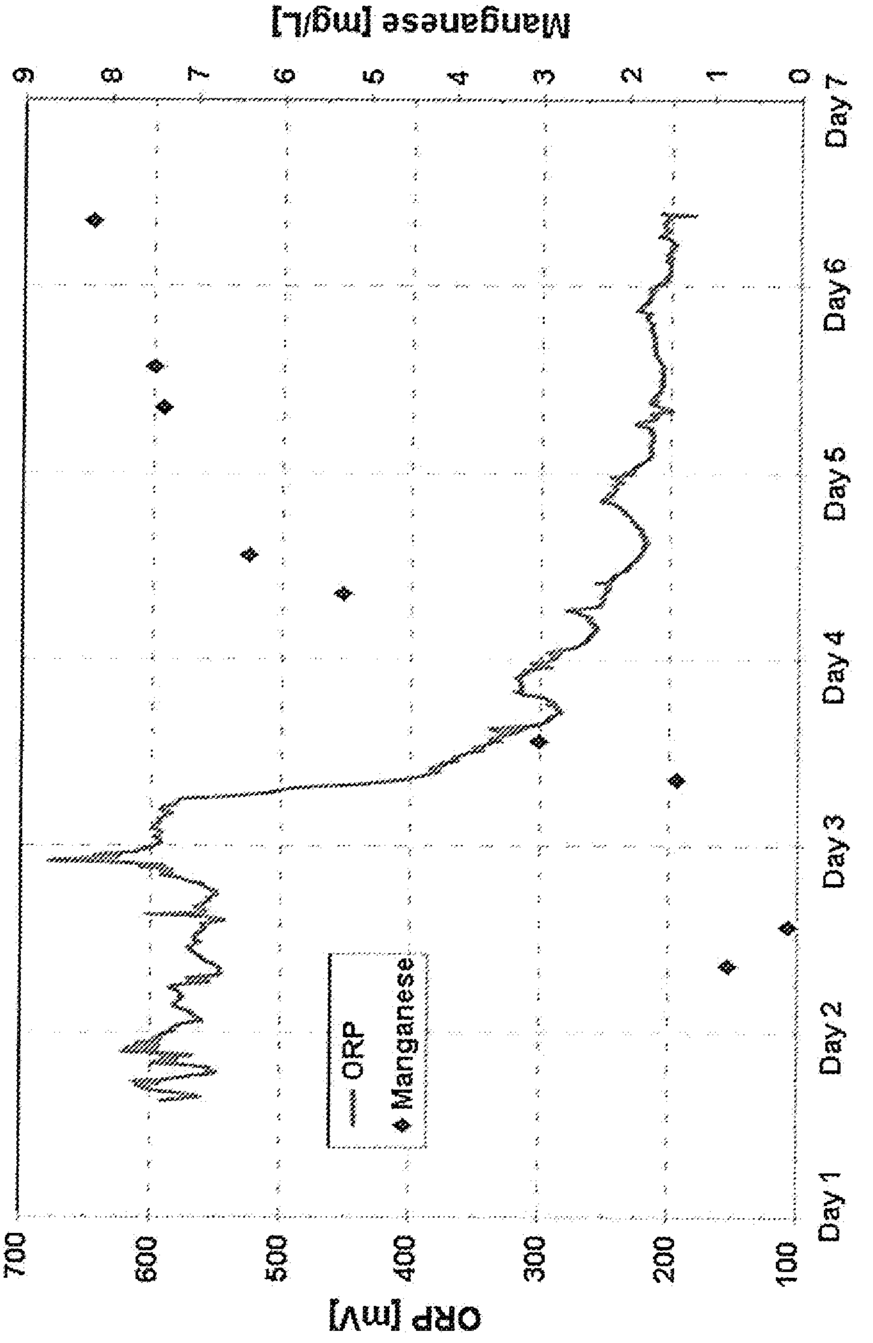
Manganese [mg/L]
9
8
7
6
5
4
3
2
1
0
ORP [mV]
700
600
500
400
300
200
100
Day 1
Day 2
Day 3
Day 4
Day 5
Day 6
Day 7
ORP
Manganese

FIG. 4

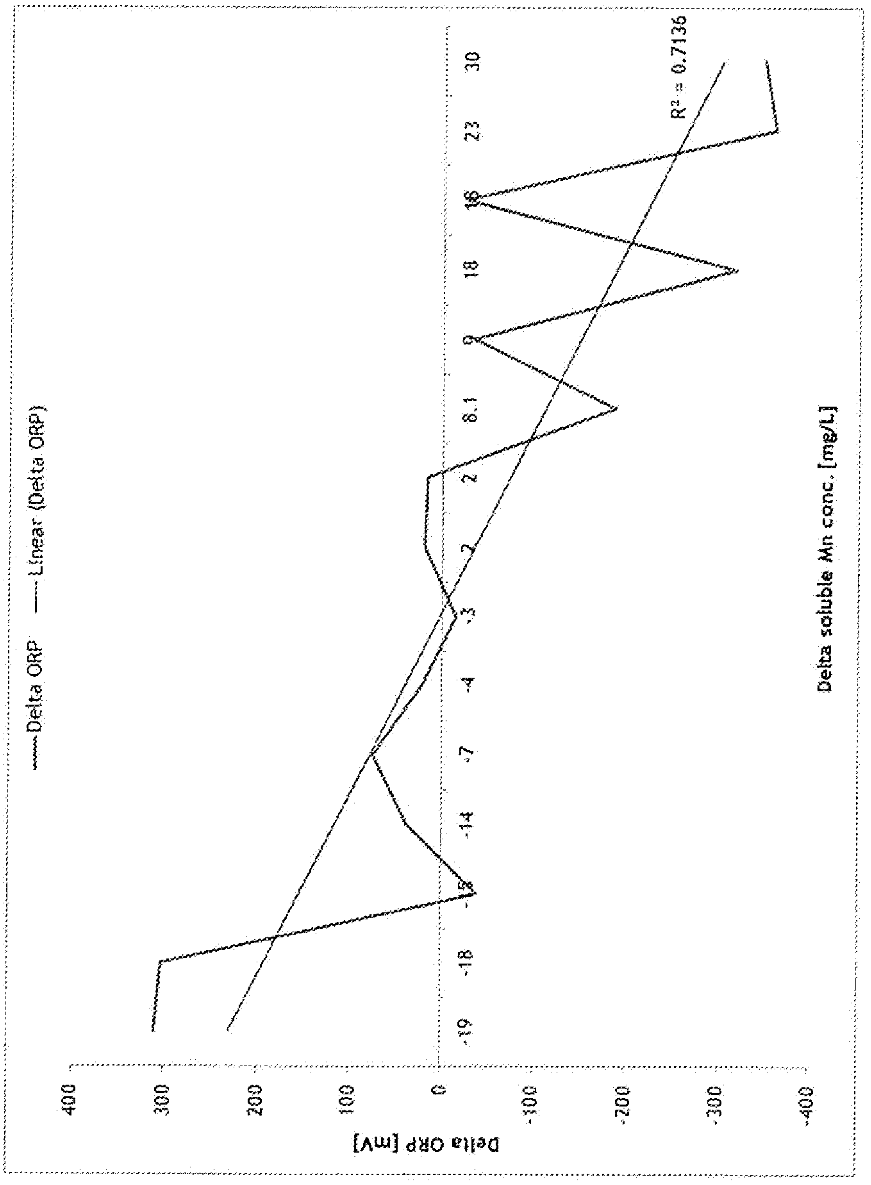
Delta ORP
Linear (Delta ORP)
Delta ORP [mV]
400
300
200
100
0
-100
-200
-300
-400
-19
-18
-15
-14
-7
-4
-3
2
2
8.1
9
18
18
23
30
$R^2$ = 0.7136
Delta soluble Mn conc. [mg/L]

FIG. 5

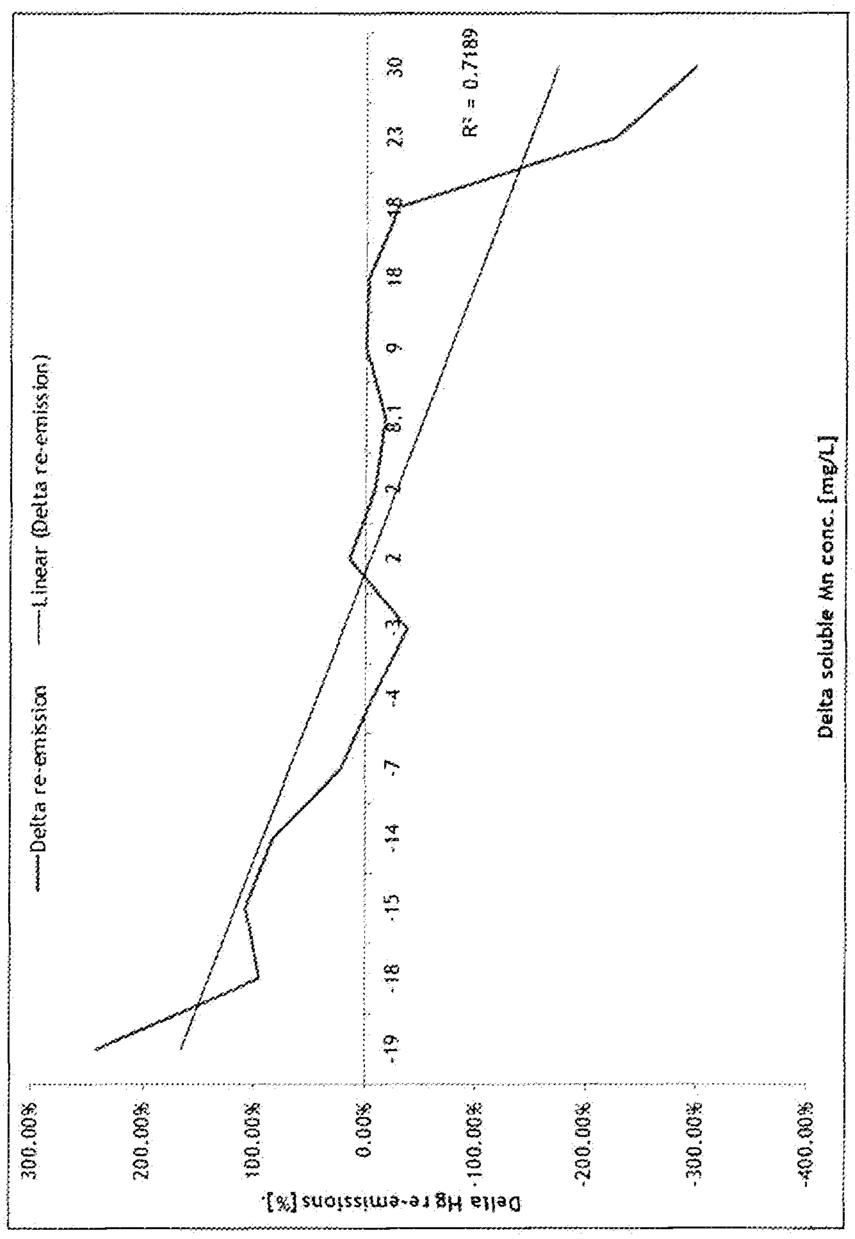
Delta re-emission
Linear (Delta re-emission)
$R^2 = 0.7189$
Delta Hg re-emissions [%]
300.00%
200.00%
100.00%
0.00%
-100.00%
-200.00%
-300.00%
-400.00%
-19
-18
-15
-14
-7
-4
-3
2
3
8.1
9
18
18
23
30
Delta soluble Mn conc. [mg/L]

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011243819 A1
- US 2011262326 A1
- US 7727307 B2